# EUROPEAN PATENT SPECIFICATION

(11) **EP 4 522 545 B1**
(45) Date of publication and mention of the grant of the patent: **11.11.2026**
(21) Application number: 22728480.9
(22) Date of filing: 10.05.2022
(51) Int. Cl.: B66B 11/04

(54) **ELEVATOR MOTOR**
AUFZUGSMOTOR
MOTEUR D'ASCENSEUR

(43) Date of publication of application: 19.03.2025
(73) Proprietor: KONE Corporation, 00330 Helsinki (FI)
(72) Inventor: BURAKOV, Andrej, 00330 Helsinki (FI); QIU, Min, 00330 Helsinki (FI); WANG, Fawei, 00330 Helsinki (FI); ZHAO, Bingham, 00330 Helsinki (FI); KORPELA, Arto, 00330 Helsinki (FI)
(74) Representative: Glück Kritzenberger Patentanwälte PartGmbB
(86) International application number: PCT/EP2022/062546
(87) International publication number: WO 2023/217353

(56) References cited:
- EP-A1- 2 553 793
- WO-A1-2009/037374

## Description

The present application refers to an elevator motor comprising a stator with stator windings and a rotor comprising permanent magnets, whereby the magnets of the rotor and the windings of the stator are arranged in an axial flux arrangement. The rotor is connected to a traction sheave with grooves for ropes, which co-act frictionally with hoisting ropes for driving an elevator car in an elevator pathway. The permanent magnets are arranged on a carrier of the rotor in a ring-like arrangement to form a magnet ring with empty or filled slots in between. The term "rope" also comprises belts and flat ropes.

An elevator motor according to the preamble of claim 1 is known from EP2553793A1.

Such kind of permanent magnet motors are for their excellent performance, particularly in machine room less elevators, widely used in elevator technology. The permanent magnets are arranged in ring-like manner whereby the slots in between, meaning the distances between the single permanent magnets, are usually filled with some carrier material like aluminium or plastics, particularly resins with glass fibre laminate. Via this measure, an elevator with a plane surface is obtained where the slots or ribs between the single permanent magnets abut with the end faces of the permanent magnets as to form a smooth ring-like face which faces the course of the wings of the elevator stator. A problem of this well-known arrangement is that this type of permanent magnet motor makes some remarkable noise which particularly in residential buildings leads to noise disturbances which are clearly unwanted.

It is thus object of the invention to provide a permanent magnet axial flux elevator motor with reduced noise propagation.

The above named object is solved with an elevator motor according to claim 1 and with a traction sheave elevator according to claim 10**.**

Preferred embodiments of the invention are subject-matter of the corresponding dependent claims. Preferred embodiments of the invention are also described in the description and in the drawings.

In the above-mentioned permanent magnet axial flux elevator motor, the slot width differs between at least some of two successive slots in the magnet ring. The applicant found out that the use of different slot widths or different distances between the permanent magnets counteracts torque ripples or torque interferences and thus efficiently reduces the noise propagation of the permanent magnet motor.

According to the invention, the slot width differs between each of two successive slots of the magnet ring so that the slot succession with different slot widths in the magnet ring is homogeneously distributes along the whole circumference or circle of the magnet ring.

Thus, the magnet ring comprises an alternation between first slots and second slots wherein the first slots have a first slot width and the second slots have a second slot width whereby the first and the second slot widths differ from each other. Via this measure, a magnet ring is obtained whereby in the succession of slots of the magnet ring every slot with an even slot number is a first slot and every slot with an odd slot number is a second slot so that the first slot width and the second slot width, so that the slots with different slots widths are alternating over of the whole magnet ring. Of course, generally, also three or four slot widths could be used which are homogeneously distributed over the whole magnet ring as to provide a central symmetrical pattern of the slot width.

Of course also more than two different slot widths can be used, e.g. three or four slot widths, which are preferably homogenously distributed over the magnet ring, particularly in a constant alteration as ..1,2,3,1,2,3.. etc. or ..1,2,3,4,1,2,3,4... But also some of the successive slots may have the same slot widths, e.g. ...1,2,2,3,1,2,2,3.. or ..1,2,2,1,2,2,1... or ...1,2,2,2,1,2,2,2,1...........(in all cases the different numbers correlate to different slot widths in succession over the magnet ring, the numbers may even designate exemplary the real slot width in mm).

In this connection it has to be mentioned that the slot does not have to be empty but the slot is regularly filled with a material as aluminium or glass fibre laminated resin so that the surface of the magnet ring is preferably always smooth. So the slots could also be described as distances between the single permanent magnets or as ribs.

In the case two different slot widths are used, preferably, the first slot width is between 1 mm and 3 mm, preferably between 2 and 3 mm, and the second slot width is between 2 and 5 mm, preferably between 3.5 and 4.5 mm. These slot widths have revealed to lead to an effective motor performance whereas on the other hand the noise propagation via such type of permanent magnet motor is essentially decreased. If several slot widths are used the smallest one is preferably between 1 and 1.5 mm and the largest one between 4 and 5 mm.

Preferably, the carrier completely fills the slots as to form ribs between the permanent magnets, which ribs preferably abut with the permanent magnets' end faces facing to the stator. Via this measure, the permanent magnets are kept in place and the surface of the magnet ring formed by the permanent magnets and the carrier material further reduces the noise propagation and thus co-acts with the use of different slot widths to reduce the noise propagation of the permanent magnet motor.

Preferably, the permanent magnets are glued or screw-fixed to the carrier so that they are immovably fixed in their ring-like arrangement in said carrier with the correct slot widths in between. As it has been mentioned above, the carrier preferably consists of a glass fibre reinforced resin or of aluminium.

Preferably, the permanent magnets are embedded within the carrier which secures them on their position so that the realization of different slot widths between the single permanent magnets is easy to realize by a corresponding shape of the carrier.

On that behalf, preferably, the carrier forms a template with holes or recesses for the permanent magnets to be inserted therein. The determination of the distances between the permanent magnets or slot widths is thus fixedly determined by the shape of the carrier which forms the template for the permanent magnets which only have to be inserted therein and glued to the carrier. Accordingly, the mounting of the permanent magnets to the carrier does not require exact measures or alignment for determining the exact positions of the permanent magnets, as these are predetermined by the recesses in the template. The template thus forms a carrier which facilitates the mounting of the permanent magnet rotor as with inserting of the permanent magnets into the template, the permanent magnets are automatically arranged correctly with respect to their mutual distances providing alternatively smaller slots and a wider slots.

Preferably, the permanent magnets are slightly V-shaped in the plane of the magnet ring which on one hand provides a good efficiency and on the other hand further reduces the noise propagation, as the magnetically active areas of the permanent magnet are smaller at the beginnings and at the ends in turning direction of the motor, compared with rectangular magnets which completely come into and out of action with the corresponding windings. Accordingly the power development is smoother and thus also the noise propagation.

As it is usual for an axial flux motor, the permanent magnets and the windings are arranged in the same distance from the motor shaft so that the whole flux shape forms a cylinder around the motor shaft. Such a motor can be formed with a low axial dimension, i.e. flat and with a high torque as the force generating electromagnetic components can be located at the outer extent of the rotor diameter and the motor thus has a good leverage. Accordingly, the motor produces a high torque with less electric power which again counteracts noise propagation and so forms a synergetic effect with the use of different slot widths.

In a preferred embodiment of the invention, the stator has a concentrated fractional-slot winding with a minimum of 0.1 slots per pole and phase a maximum of 0.5 slots per pole and phase. Such kind of motor has a better torque generation combined with less material use so that the obtained elevator motor is very efficient. This kind of motor design creates a lot of harmonics which adverses noise propagation, so that the use of different slot widths effectively counteracts this noise propagation.

The invention also relates to a traction sheave elevator comprising an elevator motor of the above-mentioned type. The hoisting ropes running around the traction sheave of the elevator motor are configured to move an elevator car along an elevator hoistway in an elevator shaft. The use of a silent permanent magnet motor makes particularly sense in connection with a traction sheave elevator which is the most used elevator type in residential buildings where the problem of noise propagation is most relevant. Therefore, the use of the inventive permanent magnet axial flux elevator motor is particularly beneficial in traction sheave elevators which are usually installed in residential buildings.

In these kinds of traction sheave elevators, usually the hoisting ropes are configured to move an elevator car and a counterweight which reduces the torque requirement of the elevator motor essentially and thus co-acts with the silent permanent magnet motor as to reduce the noise propagation of the traction sheave elevator in total thus forming a synergetic effect with the silent elevator motor.

Preferably, the elevator motor is located in the elevator shaft, preferably in the top or bottom thereof. This has the advantage that only the elevator shaft has to be noise insulated against the building so that no additional machine room has to be provided which then again had to be noise insulated against the residential part of the building. As this location of this motor regularly a higher noise propagation in the building than its arrangement in a machine room, the use of different slot widths counteracts this problem.

Preferably, a motor drive for the control of the elevator motor is located in the elevator shaft, preferably in the vicinity of the elevator motor. Via this measure, the high current generating motor drive is in the vicinity of the elevator motor so that long high current paths in a building are avoided and also any noise made by the motor drive is kept inside the elevator shaft which again reduces the noise propagation of the traction sheave elevator in total.

Following terms are used as synonyms: slot - rib -slot filled with carrier material; smaller slot - slot with a smaller width - first slot; larger slot - slot with a larger (wider) width - second slot; shaft - axis; rope - belt;

The invention is hereinafter described by the aid of the schematic drawing in which:
- Fig. 1: shows a side view on the inventive elevator motor,
- Fig. 2: shows the view II-II from Fig. 1 on the magnetic ring of the rotor of the permanent magnet motor,
- Fig. 3: shows a detail of the magnet ring of the rotor of Fig. 2, and
- Fig. 4: shows a carrier formed as a template to determine the arrangement for the fixing of the permanent magnets on the elevator rotor.

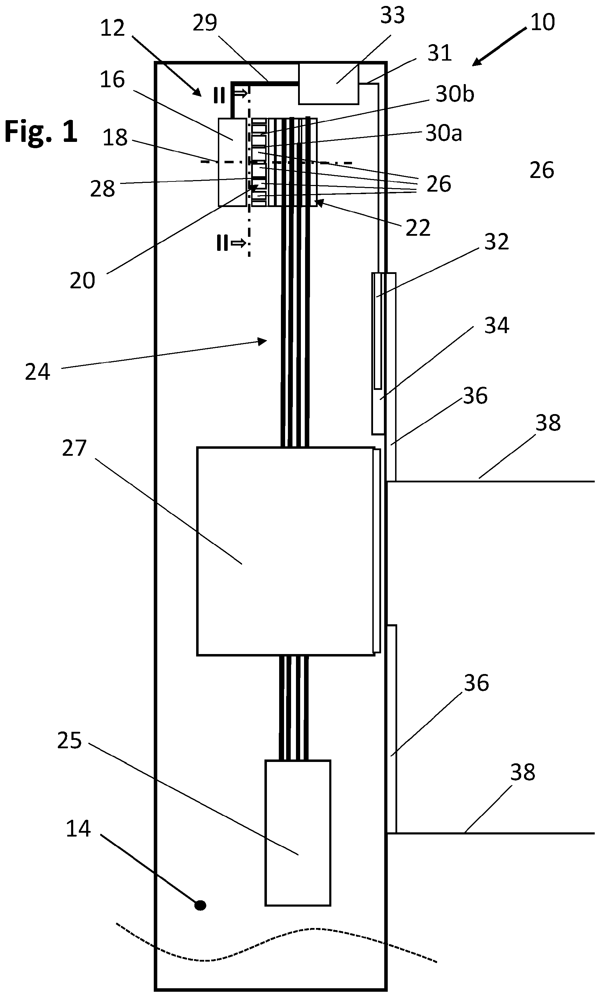

Fig. 1 shows a traction sheave elevator 10 comprising an elevator motor 12 which is a permanent magnet axial flux motor, mounted in the top of an elevator shaft 14. The elevator motor 12comprises a stator 16 as well as a rotor 20 which is rotating around a motor shaft 18 and is connected to a traction sheave 22 with rope grooves in which hoisting ropes 24 are running which move an elevator car 27 and a counterweight 25 in the elevator shaft 14. For clarity, a 1:1 suspension is shown for the elevator car 27 and the counterweight 25, but preferably a 2:1 suspension can be used for both so that the torque requirement for the elevator motor is reduced roughly by factor 2. The motor 12 has preferably flat, disc-like form, i.e. its radial directional length is greater than axial length, such that it can be fixed to an elevator guide rail and mounted between the guide rail and a shaft wall.

Further, Fig. 1 shows a motor drive 33 which is also mounted in the top of the elevator shaft 14 and is connected with the elevator motor 12 via a high current feed line. The motor drive 33 is further connected via a control line 31 to an elevator control 32 mounted in a cabinet 34 aside of a floor entrance 36 connecting a floor 38 of a building with the elevator shaft 14.

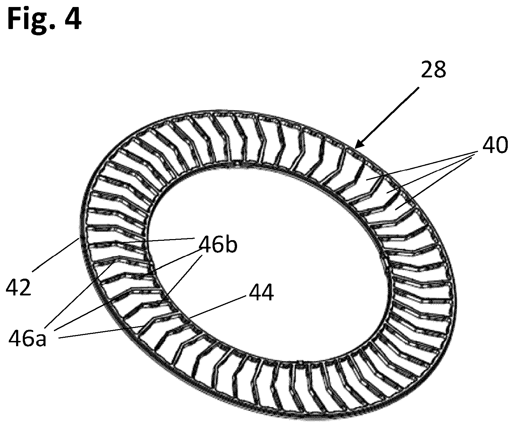

The rotor 20 of the elevator comprises single permanent magnets 26 of equal size which are distanced by a carrier 28 (see particularly Fig. 4) which is used to secure the permanent magnets 26 on the rotor 20 thereby providing alternatively first slots 30a with a smaller width and second slots 30b with a larger width between the single permanent magnets 26. The permanent magnets 26 may consist of one-piece or of several parts. Accoringly, two-part magnets are well known.

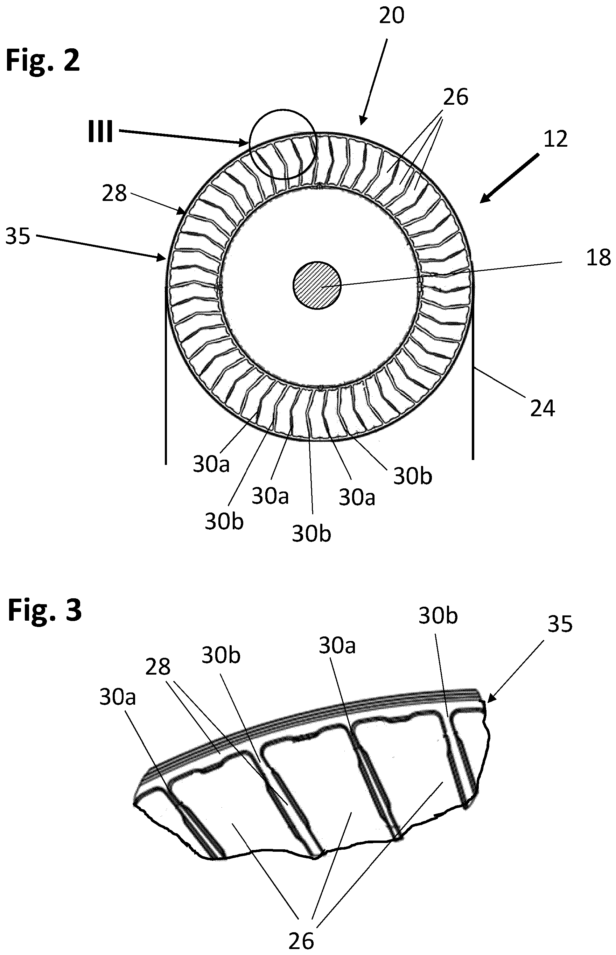

As it is shown more detailed in Figs. 2 to 4, the permanent magnets 26 form with the carrier 28 a magnet ring 35 as active force component of the rotor 20. In the magnet ring 35 the permanent magnets 26 of identical size are distanced alternatively by smaller first slots 30a and larger second slots 30b so that every even slot number is a first slot with a smaller width and every odd slot number in the magnet ring 35 is an odd slot with a larger width 30b. Via this measure, the power and torque development over a complete 360 degree turn of the rotor 20 is smoothened and thus the noise propagation of the permanent magnet motor 12 is essentially reduced.

Fig. 3 shows a detail III from Fig. 2 showing the first slots 30a with a smaller slot width of about 2 mm always followed by second slots 30b having a larger slot width of about 4 mm. In this connection it has to be mentioned that the slots 30a, 30b are immersed by the carrier 28 which as it is shown in Fig. 4 forms a template 28 for the mounting of the permanent magnets 26 on the rotor 20.

The template consists of aluminium or fiber-reinforced resin and consists of an outer ring 42 and a concentric inner ring 44 which are connected by alternating first and second ribs 46a and 46b. The first ribs 46a have a smaller width and are alternated by second ribs 46b with a larger width. Between the outer ring 42, the inner ring 44 and the ribs 46a, 46b of the template 28 recesses 40 are formed into which the permanent magnets can be pushed and glued to the carrier, so that the permanent magnets 26 are automatically arranged in the correct position forming alternating slots 30a, 30b with two different widths in between. In this template the ribs 46a, 46b form the corresponding slots 30a, 30b of the rotor 20 in the magnet ring 35.

Accordingly, this carrier 28 forms a mounting template with holes 40 which is made from a per se known typical material used to fill the gaps between permanent magnets of a permanent magnet motor, preferably aluminium or resin reinforced with fiber laminate. The carrier 28 and the permanent magnets 26 may then be screwed or glued to the rotor 20 of the permanent magnet motor.

It has to be mentioned that the noise reduction can be further enhanced in the traction sheave elevator of Fig. 1 if the car 27 and/or the counterweight 25 are suspended in a 2:1 rope suspension, which reduces the torque requirement to about a half compared to a 1:1 suspension.

This leads preferably to an elevator construction leading with the elevator motor 12 in the top or the bottom of the elevator shaft 14. Preferably the elevator also has a counterweight 25 which again reduces the torque requirement and thus the noise propagated by the motor 12. In this case diverting pulleys have to be provided in connection with the car 27 and counterweight 25 and the ends of the hoisting ropes are then to be fixed to some place in the elevator shaft 14.

It is obvious for the skilled person that the embodiments are not limiting the invention but instead that the invention can be carried out within the scope of protection of the appended patent claims.

### List of reference numbers:

- 10: traction sheave elevator
- 12: permanent magnet elevator motor with axial flux
- 14: elevator shaft
- 16: stator of the elevator rotor comprising windings
- 18: rotation shaft of the elevator motor
- 20: rotor of the elevator motor comprising permanent magnets
- 22: traction sheave with rope grooves for frictional grip of hoisting ropes
- 24: set of four parallel hoisting ropes
- 25: counterweight
- 26: permanent magnets of the rotor forming a magnet ring
- 27: elevator car
- 28: carrier for carrying the permanent magnets on the rotor - template for mounting the permanent magnets to the rotor, e.g. aluminium or fiber reinforced resin
- 29: high current feed line between motor drive and elevator motor
- 30a: first slots (narrow or smaller width)
- 30b: second slots (wide or larger width)
- 31: control line between elevator control and motor drive
- 32: elevator control
- 33: motor drive (usually comprising frequency converter)
- 34: control cabinet aside of floor door
- 35: magnet ring formed by the succession of permanent magnets and slots (ribs)
- 36: floor door
- 38: floor of the building
- 40: recesses in the template for mounting the permanent magnets to the rotor
- 42: outer ring of the template
- 44: inner ring of the template
- 46a,b: ribs of different widths between the outer ring, the inner ring and the recesses, which ribs form the slots of the magnet ring 35

## Claims

1. Elevator motor (12), comprising a stator (16) with stator windings and a rotor (20) comprising permanent magnets (26), whereby the magnets (26) of the rotor (20) and windings of the stator (16) are arranged in an axial flux arrangement, which rotor (20) is connected to a traction sheave (22) for driving hoisting ropes (24) of an elevator,
whereby the permanent magnets (26) are arranged on a carrier (28) of the rotor (20) in a ring-like arrangement to form a magnet ring (35) with slots (30a, 30b) in between,
whereby the slot width differs between at least some of two successive slots (30a, 30b) in the magnet ring (35), and whereby the magnet ring (35) comprises first slots (30a) with a first width and second slots (30b) with a second slot width, whereby the first slot width differs from the second slot width, **characterized in that** in the succession of slots (30a, 30b) in the magnet ring (35) every slot (30a) with an even slot number is a first slot and every slot (30b) with an odd slot number is a second slot.

2. Elevator motor according to claim 1, wherein the first slot width is between 1.5 mm and 3 mm, preferably between 2 and 3 mm, and the second slot width is between 2.5 mm and 5 mm, preferably between 3.5 mm and 4.5 mm.

3. Elevator motor (12) according to any of the preceding claims, wherein the carrier (28) completely fills the slots (30a, 30b) as to form ribs (46a,b) between the permanent magnets (26), which ribs (46a,b) preferably abut with the permanent magnets end faces facing to the stator (16).

4. Elevator motor (12) according to any of the preceding claims, wherein the permanent magnets (26) are glued or screw-fixed to the carrier (28).

5. Elevator motor (12) according to any of the preceding claims, wherein the carrier (28) consists of glass fiber laminate or aluminium.

6. Elevator motor (12) according to any of the preceding claims, wherein the permanent magnets (26) are embedded within the carrier (28).

7. Elevator motor (12) according to claim 6, wherein the carrier (28) forms a template with holes or recesses (40) for the permanent magnets (26) to be inserted therein.

8. Elevator motor (12) according to any of the preceding claims, wherein the permanent magnets (26) are V-shaped in the plane of the magnet ring (35).

9. Elevator motor (12) according to any of the preceding claims, wherein the stator (16) has a concentrated fractional-slot winding with a minimum of 0.1 slots per pole and phase and a maximum of 0.5 slots per pole and phase.

10. Traction sheave elevator comprising an elevator motor (12) according to any of the preceding claims,
wherein the hoisting ropes (24) are configured to move an elevator car (27) along an elevator hoistway in an elevator shaft (14).

11. Traction sheave elevator according to claim 10, wherein the hoisting ropes (24) are configured to move an elevator car (27) and optionally also a counterweight (25).

12. Traction sheave elevator according to claim 10 or 11, wherein the elevator motor (12) is located in the elevator shaft (14), preferably in the top or bottom thereof.

13. Traction sheave elevator according to any of claims 10 to 12, wherein a motor drive (33) for the control of the elevator motor (12) is located in the elevator shaft (14).

14. Traction sheave elevator according to any of claims 10 to 13, wherein the car (27) and/or the counterweight (25) are suspended on the hoisting ropes (24) in a 2:1 suspension ratio.

## Patentansprüche

1. Aufzugsmotor (12), umfassend einen Stator (16) mit Statorwicklungen und einen Rotor (20) aufweisend Permanentmagnete (26), wobei die Magnete (26) des Rotors (20) und die Wicklungen des Stators (16) in einer Axialflussanordnung angeordnet sind, wobei der Rotor (20) mit einer Treibscheibe (22) zum Antreiben von Hubseilen (24) eines Aufzugs verbunden ist,
wobei die Permanentmagnete (26) auf einem Träger (28) des Rotors (20) in einer ringförmigen Anordnung angeordnet sind, um einen Magnetring (35) mit dazwischenliegenden Schlitzen (30a, 30b) zu bilden,
wobei sich die Schlitzbreite zwischen zumindest einigen von zwei aufeinanderfolgenden Schlitzen (30a, 30b) in dem Magnetring (35) unterscheidet und wobei der Magnetring (35) erste Schlitze (30a) mit einer ersten Breite und zweite Schlitze (30b) mit einer zweiten Schlitzbreite umfasst, wobei sich die erste Schlitzbreite von der zweiten Schlitzbreite unterscheidet, **dadurch gekennzeichnet, dass** in der Abfolge der Schlitze (30a, 30b) im Magnetring (35) jeder Schlitz (30a) mit einer geraden Schlitznummer ein erster Schlitz und jeder Schlitz (30b) mit einer ungeraden Schlitznummer ein zweiter Schlitz ist.

2. Aufzugsmotor nach Anspruch 1, wobei die erste Schlitzbreite zwischen 1,5 mm und 3 mm, vorzugsweise zwischen 2 und 3 mm, und die zweite Schlitzbreite zwischen 2,5 mm und 5 mm, vorzugsweise zwischen 3,5 mm und 4,5 mm, beträgt.

3. Aufzugsmotor (12) nach einem der vorhergehenden Ansprüche, wobei der Träger (28) die Schlitze (30a, 30b) vollständig ausfüllt, so dass zwischen den Permanentmagneten (26) Rippen (46a, b) ausgebildet sind, wobei diese Rippen (46a, b) vorzugsweise an den dem Stator (16) zugewandten Stirnflächen der Permanentmagnete anliegen.

4. Aufzugsmotor (12) nach einem der vorhergehenden Ansprüche, wobei die Permanentmagnete (26) auf den Träger (28) geklebt oder mit diesem verschraubt sind.

5. Aufzugsmotor (12) nach einem der vorhergehenden Ansprüche, wobei der Träger (28) aus Glasfaserlaminat oder Aluminium besteht.

6. Aufzugsmotor (12) nach einem der vorhergehenden Ansprüche, wobei die Permanentmagnete (26) in den Träger (28) eingebettet sind.

7. Aufzugsmotor (12) nach Anspruch 6, wobei der Träger (28) eine Schablone mit Löchern oder Aussparungen (40) zum Einsetzen der Permanentmagnete (26) bildet.

8. Aufzugsmotor (12) nach einem der vorhergehenden Ansprüche, wobei die Permanentmagnete (26) in der Ebene des Magnetrings (35) V-förmig sind.

9. Aufzugsmotor (12) nach einem der vorhergehenden Ansprüche, wobei der Stator (16) eine konzentrierte Teilschlitzwicklung mit mindestens 0,1 Schlitzen pro Pol und Phase und höchstens 0,5 Schlitzen pro Pol und Phase aufweist.

10. Treibscheibenaufzug, umfassend einen Aufzugsmotor (12) gemäß einem der vorhergehenden Ansprüche,
wobei die Hubseile (24) so ausgelegt sind, dass sie eine Aufzugskabine (27) entlang eines Aufzugsschachts in einem Aufzugsschacht (14) bewegen.

11. Treibscheibenaufzug nach Anspruch 10, wobei die Hubseile (24) so ausgelegt sind, dass sie eine Aufzugskabine (27) und optional auch ein Gegengewicht (25) bewegen.

12. Treibscheibenaufzug nach Anspruch 10 oder 11, wobei sich der Aufzugsmotor (12) im Aufzugsschacht (14), vorzugsweise an dessen oberem oder unteren Ende, befindet.

13. Treibscheibenaufzug nach einem der Ansprüche 10 bis 12, wobei sich ein Motorantrieb (33) zur Steuerung des Aufzugsmotors (12) im Aufzugsschacht (14) befindet.

14. Treibscheibenaufzug nach einem der Ansprüche 10 bis 13, wobei die Kabine (27) und/oder das Gegengewicht (25) in einem Aufhängungsverhältnis 2:1 an den Hubseilen (24) aufgehängt sind.

## Revendications

1. Moteur d'ascenseur (12), comprenant un stator (16) muni d'enroulements de stator et un rotor (20) comprenant des aimants permanents (26), les aimants (26) du rotor (20) et les enroulements du stator (16) étant disposés selon une configuration à flux axial, lequel rotor (20) est relié à une poulie de traction (22) destinée à entraîner les câbles de levage (24) d'un ascenseur,
les aimants permanents (26) étant disposés sur un support (28) du rotor (20) selon une configuration annulaire pour former un anneau magnétique (35) comportant des fentes (30a, 30b) entre eux,
la largeur des fentes différant entre au moins certaines de deux fentes successives (30a, 30b) de l'anneau magnétique (35), et l'anneau magnétique (35) comprenant des premières fentes (30a) d'une première largeur et des secondes fentes (30b) d'une seconde largeur, la première largeur de fente différant de la seconde largeur de fente, **caractérisé en ce que**, dans la succession de fentes (30a, 30b) de l'anneau magnétique (35), chaque fente (30a) portant un numéro pair est une première fente et chaque fente (30b) portant un numéro impair est une deuxième fente.

2. Moteur d'ascenseur selon la revendication 1, dans lequel la première largeur de fente est comprise entre 1,5 mm et 3 mm, de préférence entre 2 et 3 mm, et la deuxième largeur de fente est comprise entre 2,5 mm et 5 mm, de préférence entre 3,5 mm et 4,5 mm.

3. Moteur d'ascenseur (12) selon l'une quelconque des revendications précédentes, dans lequel le support (28) remplit complètement les fentes (30a, 30b) de manière à former des nervures (46a, b) entre les aimants permanents (26), lesquelles nervures (46a, b) viennent de préférence en butée contre les faces d'extrémité des aimants permanents tournées vers le stator (16).

4. Moteur d'ascenseur (12) selon l'une quelconque des revendications précédentes, dans lequel les aimants permanents (26) sont collés ou vissés sur le support (28).

5. Moteur d'ascenseur (12) selon l'une quelconque des revendications précédentes, dans lequel le support (28) est constitué de stratifié de fibre de verre ou d'aluminium.

6. Moteur d'ascenseur (12) selon l'une quelconque des revendications précédentes, dans lequel les aimants permanents (26) sont encastrés dans le support (28).

7. Moteur d'ascenseur (12) selon la revendication 6, dans lequel le support (28) forme un gabarit comportant des trous ou des évidements (40) destinés à l'insertion des aimants permanents (26).

8. Moteur d'ascenseur (12) selon l'une quelconque des revendications précédentes, dans lequel les aimants permanents (26) ont une forme en V dans le plan de l'anneau magnétique (35).

9. Moteur d'ascenseur (12) selon l'une quelconque des revendications précédentes, dans lequel le stator (16) comporte un enroulement à fentes fractionnaires concentrées avec un minimum de 0,1 fente par pôle et par phase et un maximum de 0,5 fente par pôle et par phase.

10. Ascenseur à poulie de traction comprenant un moteur d'ascenseur (12) selon l'une quelconque des revendications précédentes,
dans lequel les câbles de levage (24) sont configurés pour déplacer une cabine d'ascenseur (27) le long d'une voie de levage dans une cage d'ascenseur (14).

11. Ascenseur à poulie de traction selon la revendication 10, dans lequel les câbles de levage (24) sont configurés pour déplacer une cabine d'ascenseur (27) et, éventuellement, également un contrepoids (25).

12. Ascenseur à poulie de traction selon la revendication 10 ou 11, dans lequel le moteur d'ascenseur (12) est situé dans la cage d'ascenseur (14), de préférence dans sa partie supérieure ou inférieure.

13. Ascenseur à poulie de traction selon l'une quelconque des revendications 10 à 12, dans lequel un entraînement moteur (33) destiné à la commande du moteur d'ascenseur (12) est situé dans la cage d'ascenseur (14).

14. Ascenseur à poulie de traction selon l'une quelconque des revendications 10 à 13, dans lequel la cabine (27) et/ou le contrepoids (25) sont suspendus aux câbles de levage (24) selon un rapport de suspension de 2:1.
